# EUROPÄISCHE PATENTANMELDUNG

(11) **EP 2 340 959 A2**
(43) Veröffentlichungstag der Anmeldung: **06.07.2011**
(21) Anmeldenummer: 10450183.8
(22) Anmeldetag: 25.11.2010
(51) Int. Cl.: B60L 11/18, H02J 7/00

(54) **Vorrichtung zum Zapfen eines Ladestroms für elektrische Batterien eines Elektrofahrzeuges**

(30) Priorität: 23.12.2009 AT 20292009
(71) Anmelder: Mehler Elektrotechnik Ges.m.b.H., 4493 Wolfern bei Steyr (AT)
(72) Erfinder: Mehler, Alexander, 4493 Wolfern bei Steyr (AT)
(74) Vertreter: Hübscher, Helmut

(57) **Zusammenfassung**

Es wird eine Vorrichtung zum Zapfen eines Ladestroms für elektrische Batterien eines Elektrofahrzeugs mit mehreren Zapfstellen (1) in Form von Steckdosen, die über mit je einem Steuerschalter (5) und einer Strommesseinrichtung (7) versehene Stichleitungen (2) an ein durch einen Fehlerstromschutzschalter (4) gesichertes Versorgungsnetz (3) angeschlossen sind, und mit einer Steuereinrichtung (6) zur Ansteuerung der Steuerschalter (5) und zum Auswerten der Strommesseinrichtungen (7) beschrieben. Um vorteilhafte Handhabungsbedingungen zu schaffen, wird vorgeschlagen, dass die Steuereinrichtung (6) die Steuerschalter (5) in den Stichleitungen (2) in Abhängigkeit vom Messwert der Strommesseinrichtung (7) in der jeweiligen Stichleitung (2) sowie in Abhängigkeit vom Fehlerstromschutzschalter (4) öffnet und in Abhängigkeit vom Fehlerstromschutzschalter (4) und den abgespeicherten Messwerten der Strommesseinrichtungen (7) unmittelbar vor dem Öffnen der Steuerschalter (5) zusammen mit dem Fehlerstromschutzschalter (4) schließt.

## Beschreibung

Die Erfindung bezieht sich auf eine Vorrichtung zum Zapfen eines Ladestroms für elektrische Batterien eines Elektrofahrzeugs mit mehreren Zapfstellen in Form von Steckdosen, die über mit je einem Steuerschalter und einer Strommesseinrichtung versehene Stichleitungen an ein durch einen Fehlerstromschutzschalter gesichertes Versorgungsnetz angeschlossen sind, und mit einer Steuereinrichtung zur Ansteuerung der Steuerschalter und zum Auswerten der Strommesseinrichtungen.

Zum Laden der Batterien von Elektrofahrzeugen über die bordeigenen Ladegeräte ist es bekannt (BE 44 14 008 C2), im Bereich eines Parkplatzes Zapfstellen in Form von Steckdosen zur Verfügung zu stellen, die über Stichleitungen mit einem elektrischen Versorgungsnetz verbunden sind, sodass an die Steckdosen ein Ladekabel zum Laden der Batterien angesteckt werden kann. Der Ladestrom wird zur Verrechnung über in den einzelnen Stichleitungen vorgesehene Strommesseinrichtungen gemessen, die an eine entsprechende Auswerte- und Steuerschaltung angeschlossen sind. Um einem Missbrauch vorzubeugen, sind in den einzelnen Stichleitungen zusätzliche Steuerschalter vorgesehen, die bei einer Stromunterbrechung die Stichleitung vom Versorgungsnetz abschalten, sodass durch ein Auswechseln oder Umstecken des Ladekabels nicht unbefugt Strom gezapft werden kann. Da sich ein Benützer über eine Ein- und Ausgabeeinrichtung anmelden muss, wird mit der Anmeldung die jeweilige Zapfstelle über den zugehörigen Steuerschalter ans Versorgungsnetz geschaltet. Nachteilig bei dieser bekannten Anordnung ist vor allem, dass beim Auftreten eines Kurzschlusses und der damit verbundenen Auslösung des zwischen dem Versorgungsnetz und den einzelnen Stichleitungen vorgesehenen Fehlerstromschutzschalters alle Zapfstellen außer Betrieb genommen werden und erst wieder eingeschaltet werden können, wenn der den Fehlerstromschutzschalter auslösende Fehler behoben ist.

Der Erfindung liegt somit die Aufgabe zugrunde, eine Vorrichtung der eingangs geschilderten Art zum Zapfen eines Ladestroms für elektrische Batterien eines Elektrofahrzeugs so auszugestalten, dass ein vorteilhafter Betrieb unter Berücksichtigung allfällig auftretender Fehler sichergestellt werden kann.

Die Erfindung löst die gestellte Aufgabe dadurch, dass die Steuereinrichtung die Steuerschalter in den Stichleitungen in Abhängigkeit vom Messwert der Strommesseinrichtung in der jeweiligen Stichleitung sowie in Abhängigkeit vom Fehlerstromschutzschalter öffnet und in Abhängigkeit vom Fehlerstromschutzschalter und den abgespeicherten Messwerten der Strommesseinrichtungen unmittelbar vor dem Öffnen der Steuerschalter zusammen mit dem Fehlerstromschutzschalter schließt.

Durch die vom Messwert der Strommesseinrichtungen abhängige Schaltung der Steuerschalter wird eine Überwachung der einzelnen Stichleitungen möglich, um diese Stichleitungen beim Über- oder Unterschreiten vorgegebener Schwellwerte für den Ladestrom die jeweilige Stichleitung abzuschalten. Damit kann auch eine Überwachung des Ladungsendes einer Batterie über die Zapfstelle durchgeführt werden, weil mit dem Ladungsende der Ladestrom entsprechend abfällt. Tritt beispielsweise beim Anschließen eines fehlerhaften Ladegeräts an einer Zapfstelle ein Kurzschlussstrom auf, der das Auslösen des zur Absicherung des Versorgungsnetzes vorgesehenen Fehlerstromschutzschalters bedingt, so kann aufgrund der gemessenen Stromwerte in den einzelnen Stichleitungen jene Stichleitung bestimmt werden, deren Strom die Auslösung des Fehlerstromschutzschalters bewirkt hat. Damit sind die notwendigen Voraussetzungen dafür geschaffen, alle Zapfstellen mit Ausnahme der den Fehler verursachenden Zapfstelle wieder an das Versorgungsnetz anzuschließen. Zu diesem Zweck brauchen ja lediglich die in der Steuereinrichtung abgespeicherten Messwerte der Ladeströme in den einzelnen Stichleitungen vor dem Auslösen des Fehlerschutzschalters ausgewertet zu werden, um die Steuerschalter in den ungefährdeten Stichleitungen und den Fehlerstromschutzschalter wieder über die Steuereinrichtung zu schließen, sodass an den wieder eingeschalteten Zapfstellen unabhängig von der Behebung des die Auslösung des Fehlerstromschutzschalters verursachenden Fehlers Ladestrom entnommen werden kann.

Für einen Ladevorgang ist es an sich nur erforderlich, den jeweiligen Steuerschalter in der Stichleitung der angewählten Zapfstelle zu schließen, was durch eine einfache Anmeldung durch den Benützer erfolgen kann. Besonders vorteilhafte Konstruktionsverhältnisse ergeben sich in diesem Zusammenhang, wenn die Steuereinrichtung an eine Ein- und Ausgabeeinrichtung angeschlossen ist und in Abhängigkeit von der jeweils geforderten Eingabe den offenen Steuerschalter in einer Stichleitung schließt und die dieser Stichleitung zugehörige Zapfstelle über die Ein- und Ausgabeeinrichtung anzeigt.

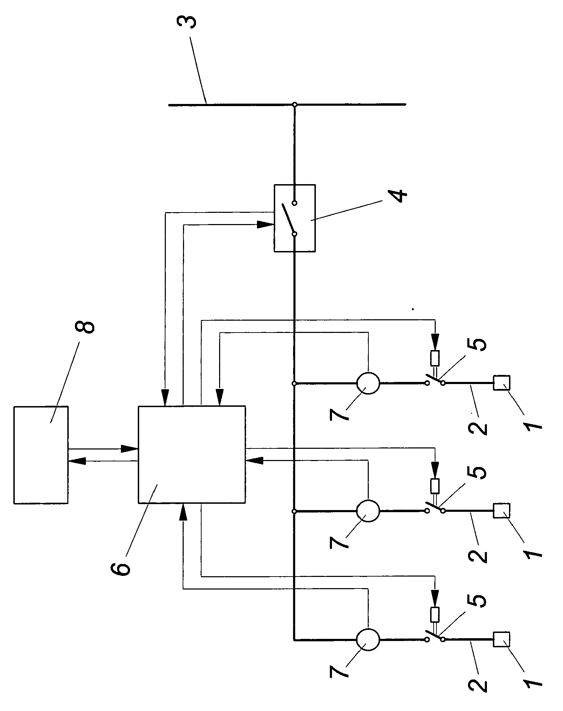

In der Zeichnung ist der Erfindungsgegenstand beispielsweise dargestellt, und zwar wird eine erfindungsgemäße Vorrichtung zum Zapfen eines Ladestroms für elektrische Batterien eines Elektrofahrzeugs in einem vereinfachten Blockschaltbild gezeigt.

Die dargestellte Vorrichtung zum Zapfen eines Ladestroms für elektrische Batterien eines Elektrofahrzeugs weist mehrere Zapfstellen 1 in Form von Steckdosen auf, die über je eine Stichleitung 2 mit einem elektrischen Versorgungsnetz 3 verbunden sind. Zur Absicherung dieses Versorgungsnetzes 3 ist zwischen den Stichleitungen 2 und dem Versorgungsnetz 3 ein Fehlerstromschutzschalter 4 vorgesehen. Die einzelnen Stichleitungen 2 werden mit Hilfe von Steuerschaltern 5 ans Versorgungsnetz 3 geschaltet, die über eine Steuereinrichtung 6 angesteuert werden. Der durch die Stichleitungen 2 fließende Ladestrom wird jeweils über eine Strommesseinrichtung 7 erfasst, die die Steuereinrichtung 6 mit den Strommesswerten beaufschlagt. Die Steuereinrichtung 6 ist mit einem Vergleichstufe versehen, in der die jeweiligen Strommesswerte mit vorgegebenen Schwellwerten für eine obere und eine untere Stromgrenze verglichen werden, sodass beim Über- bzw. Unterschreiten eines dieser Schwellwerte der in der jeweiligen Stichleitung 2 liegende Steuerschalter 5 über die Steuereinrichtung 6 geöffnet und damit die zugehörige Zapfstelle 1 vom Versorgungsnetz 3 getrennt wird. Fällt der Fehlerstromschutzschalter 4 zufolge eines entsprechenden Fehlerstroms, so öffnet die vom Fehlerstromschutzschalter 4 beaufschlagte Steuereinrichtung 6 die Steuerschalter 5 aller Stichleitungen 2, um sie mit Ausnahme des Steuerschalters 5 in jener Stichleitung 2, die die Auslösung des Fehlerstromschutzschalters 4 verursacht hat, wieder einzuschalten, sodass mit dem Wiedereinschalten des Fehlerstromschutzschalters 4 über die Steuereinrichtung 6 die fehlerfreien Zapfstellen 1 wieder zur Stromentnahme zur Verfügung stehen.

Die Steuereinrichtung 6 ist mit einer Ein- und Ausgabeeinrichtung 8 verbunden, über die ein Benützer beispielsweise seine für eine automatische Abrechnung erforderliche Kennung eingeben kann. Nach einer Prüfung der Berechtigung des Benützers auf der Basis der eingegebenen Kennung wird der Steuerschalter 5 in der Stichleitung 2 einer unbenützten Zapfstelle 1 eingeschaltet und dem Benützer diese ans Versorgungsnetz 2 geschaltete Zapfstelle 1 angezeigt. Über diese Zapfstelle 1 können demnach über ein entsprechendes Ladekabel die Batterien eines Elektrofahrzeugs über das bordeigene Ladegerät geladen werden. Mit der Beendigung des Ladevorgangs und dem damit verbundenen Abfall des Ladestroms in der Stichleitung 2 wird die Zapfstelle 1 vom Versorgungsnetz 3 abgeschaltet und die gezapfte Energie anhand der gemessenen Stromwerte ermittelt, um das Konto des Benützers entsprechend zu belasten.

## Patentansprüche

1. Vorrichtung zum Zapfen eines Ladestroms für elektrische Batterien eines Elektrofahrzeugs mit mehreren Zapfstellen (1) in Form von Steckdosen, die über mit je einem Steuerschalter (5) und einer Strommesseinrichtung (7) versehene Stichleitungen (2) an ein durch einen Fehlerstromschutzschalter (4) gesichertes Versorgungsnetz (3) angeschlossen sind, und mit einer Steuereinrichtung zur Ansteuerung der Steuerschalter und zum Auswerten der Strommesseinrichtungen, **dadurch gekennzeichnet, dass** die Steuereinrichtung (6) die Steuerschalter (5) in den Stichleitungen (2) in Abhängigkeit vom Messwert der Strommesseinrichtung (7) in der jeweiligen Stichleitung (2) sowie in Abhängigkeit vom Fehlerstromschutzschalter (4) öffnet und in Abhängigkeit vom Fehlerstromschutzschalter (4) und den abgespeicherten Messwerten der Strommesseinrichtungen (7) unmittelbar vor dem Öffnen der Steuerschalter (5) zusammen mit dem Fehlerstromschutzschalter (4) schließt.

2. Vorrichtung nach Anspruch 1, **dadurch gekennzeichnet, dass** die Steuereinrichtung (6) an eine Ein- und Ausgabeeinrichtung (8) angeschlossen ist und in Abhängigkeit von der Eingabe den offenen Steuerschalter (5) in einer Stichleitung (2) schließt und die dieser Stichleitung (2) zugehörige Zapfstelle (1) über die Ein- und Ausgabeeinrichtung (8) anzeigt.
